# EUROPÄISCHE PATENTSCHRIFT

(11) **EP 4 034 701 B1**
(45) Veröffentlichungstag und Bekanntmachung des Hinweises auf die Patenterteilung: **13.11.2024**
(21) Anmeldenummer: 20781446.8
(22) Anmeldetag: 17.09.2020
(51) Int. Cl.: D06F 58/20, D06F 58/48

(54) **GERÄT ZUM TROCKNEN VON WÄSCHE UND VERFAHREN ZUM BETREIBEN EINES SOLCHEN GERÄTS**
APPLIANCE FOR DRYING LAUNDRY AND METHOD FOR OPERATING SUCH AN APPLIANCE
APPAREIL DE SÉCHAGE DE LINGE ET PROCÉDÉ DE FONCTIONNEMENT D'UN TEL APPAREIL

(30) Priorität: 25.09.2019 DE 102019214687
(43) Veröffentlichungstag der Anmeldung: 03.08.2022
(73) Patentinhaber: BSH Hausgeräte GmbH, 81739 München (DE)
(72) Erfinder: HARBACH, Alvaro, 10555 Berlin (DE); HEYDER, Reinhard, 13403 Berlin (DE); STOLZE, Andreas, 14612 Falkensee (DE)
(86) Internationale Anmeldenummer: PCT/EP2020/075947
(87) Internationale Veröffentlichungsnummer: WO 2021/058365

(56) Entgegenhaltungen:
- WO-A1-2018/123845
- US-A1- 2016 168 777
- US-A1- 2019 145 043

## Beschreibung

Die Erfindung betrifft ein Gerät zum Trocknen von Wäsche, aufweisend ein Gerätegehäuse, wenigstens eine innerhalb des Gerätegehäuses angeordnete offene Trocknungsluftführung zum Ansaugen von Umgebungsluft während eines Trocknungsvorgangs und wenigstens eine innerhalb des Gerätegehäuses angeordnete, thermisch an die Trocknungsluftführung gekoppelte Wärmepumpe, wobei die Trocknungsluftführung wenigstens eine innerhalb des Gerätegehäuses angeordnete Luftansaugöffnung aufweist, die an einem Abschnitt der Trocknungsluftführung angeordnet ist, der bezüglich eines während des Trocknungsvorgangs gegebenen Luftmassenstroms durch die Trocknungsluftführung einem Verflüssiger der Wärmepumpe vorgeschaltet ist. Des Weiteren betrifft die Erfindung ein Verfahren zum Betreiben eines Geräts zum Trocknen von Wäsche, wobei einem Verflüssiger einer innerhalb eines Gerätegehäuses des Geräts angeordneten Wärmepumpe des Geräts ein Luftmassenstrom zugeführt wird, der teilweise aus einer Umgebungsluft, die mittels einer thermisch mit der Wärmepumpe gekoppelten offenen Trocknungsluftführung des Geräts angesaugt wird, und teilweise aus einer innerhalb des Gerätegehäuses angesaugten Luft besteht.

Ein Gerät der eingangs genannten Art ist beispielsweise aus EP 2 196 577 A1 bekannt. Bei einem solchen Gerät wird die Trocknungsluft aus der Umgebung des Geräts und nach Eintritt in das Gerätegehäuse durch einen Verflüssiger der Wärmepumpe gesaugt. Die angesaugte Umgebungsluft wird beim Durchströmen des Verflüssigers erwärmt und strömt anschließend weiter in Richtung eines Lüfters der Trocknungsluftführung. Die erwärmte Trocknungsluft wird im Lüfter verdichtet und mittels des Lüfters in eine Wäschetrommel bzw. einen die Wäschetrommel radial außen und rückseitig umschließenden Behälter des Geräts geleitet. Beim Trocknen von feuchter Wäsche innerhalb der Wäschetrommel wird die Trocknungsluft innerhalb der Wäschetrommel abgekühlt und mit Wasserdampf beladen. Der größte Teil der Trocknungsluft strömt von der Wäschetrommel weiter durch eine Filtereinheit der Trocknungsluftführung, durch einen Verdampfer der Wärmepumpe und, falls benötigt, durch einen Zusatzwärmetauscher der Wärmepumpe und verlässt anschließend das Gerät. Teile der Trocknungsluft gelangen jedoch durch Leckagen an einer vorderen und einer hinteren Trommeldichtung in einen Innenraum des Gerätegehäuses. Diese Leckageluft führt zu einer Verschlechterung der Kondensationsrate des Trocknungsvorgangs, zu einer Verlängerung des Trocknungsvorgangs und somit auch zu einer Verlängerung einer Leistungsaufnahme des Geräts, was wiederum zu einem höheren Energieeinsatz führt.

US 2019 / 0 145 043 A1 offenbart einen Trockner mit einem Luftzirkulationskanal bereitgestellt. Der Luftzirkulationskanal definiert mit einer Wäschetrommel des Trockners eine Rezirkulationsschleife. Der Luftzirkulationskanal kann eine vorbestimmte Leckageöffnung in Fluidverbindung zwischen der Rezirkulationsschleife und dem Innenvolumen des Gehäuses definieren. Ein Wärmetauscherabschnitt des Trockners ist entlang des Luftzirkulationskanals in thermischer Verbindung mit Luft innerhalb der Rezirkulationsschleife angeordnet.

WO 2018 / 123 845 A1 offenbart einen Trockner mit einem Gehäuse, einer Wäschetrommel, einer Wärmepumpe, einem mit der Wäschetrommel verbundenen Luftzirkulationskanal und einem in dem Luftzirkulationskanal vorgesehenen Gebläse. Zudem weist der Trockner einen Abluftkanal, durch den Trocknungsluft aus dem Trockner abgeführt wird, und einen Einlasskanal, durch den Umgebungsluft in den Luftzirkulationskanal eintritt, auf. Der Abluftkanal ist über einen Verbindungskanal mit dem Einlasskanal verbunden.

Eine Aufgabe der Erfindung ist es, den Energieverbrauch eines Geräts zum Trocknen von Wäsche zu reduzieren.

Diese Aufgabe wird durch die unabhängigen Patentansprüche gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Geräts können dabei Ausgestaltungen des Verfahrens entsprechen, und umgekehrt, selbst wenn im Folgenden hierauf im Einzelfall nicht explizit hingewiesen wird.

Erfindungsgemäß wird während eines Trocknungsvorgangs über die innerhalb des Gerätegehäuses angeordnete Luftansaugöffnung der Trocknungsluftführung eine Leckageluft innerhalb des Gerätegehäuses in die Trocknungsluftführung eingesaugt, mit der in die Trocknungsluftführung eingesaugten Umgebungsluft aus der Umgebung des Geräts vermischt und gemeinsam mit dieser Umgebungsluft dem Verflüssiger der Wärmepumpe zugeführt. Hierdurch können Energieverluste, die durch Luftleckagen an der Trocknungsluftführung innerhalb des Gerätegehäuses verursacht werden, wieder in den laufenden Trocknungsvorgang eingegliedert werden. Durch die Vermischung der angesaugten Leckageluft mit der angesaugten Umgebungsluft wird eine Mischluft erzeugt, deren Enthalpie um den Betrag der Enthalpie der Leckageluft höher als die Enthalpie der Umgebungsluft ist. Hierdurch werden energetische Verluste des Trocknungsvorgangs reduziert, wodurch der Trocknungsvorgang verkürzt wird, die Kondensationsrate des Trocknungsvorgangs erhöht wird und der Energiebedarf des Geräts reduziert wird. Die Erfindung erzielt somit eine Verbesserung von Performance-Werten eines Geräts zum Trocknen von Wäsche mit einer Wärmepumpe und einer offenen Trocknungsluftführung.

Der Trocknungsluftkreislauf kann auch zwei oder mehrere erfindungsgemäße Luftansaugöffnungen aufweisen. Die Trocknungsluftführung weist wenigstens ein Gebläse zum Fördern von Luft durch die Trocknungsluftführung während eines Trocknungsvorgangs auf. Zudem ist ein Abschnitt der Trocknungsluftführung durch einen Behälter des Geräts gebildet, in dem eine Wäschetrommel drehbar aufgenommen ist.

Die Wärmepumpe weist erfindungsgemäß zusätzlich zu einem Verdampfer einen bezüglich des Luftmassenstroms durch die Trocknungsluftführung dem Verdampfer nachgeschalteten Zusatzwärmetauscher auf, der bezüglich eines Kältemittelstroms durch einen Kältemittelkreislauf der Wärmepumpe unmittelbar oder über den Verflüssiger mittelbar einer Expansionseinheit des Kältemittelkreislaufs vorgeschaltet ist. Hierdurch wird der Wirkungsgrad des Geräts verbessert, was mit einer weiteren Einsparung von Energie für einen Trocknungsvorgang verbunden ist.

Das Gerät zum Trocknen von Wäsche kann beispielsweise als Wäschetrockner, Waschtrockner oder dergleichen ausgebildet sein.

Gemäß einer vorteilhaften Ausgestaltung ist die Luftansaugöffnung über einen Luftansaugkanal kommunizierend mit einem Bereich einer Bodengruppe des Geräts verbunden, der separat von einem Wärmetauscheraufnahmebereich der Bodengruppe angeordnet ist und in dem zumindest ein Verdichter der Wärmepumpe angeordnet ist. Der Wärmetauscheraufnahmebereich kann die Wärmetauscher der Wärmepumpe gehäuseartig umschließen, um zu gewährleiten, dass die Wärmetauscher auf gewünschte Art und Weise von der Trocknungsluft umströmt und/oder durchströmt werden. In dem separat von dem Wärmetauscheraufnahmebereich angeordneten Bereich der Bodengruppe kann zusätzlich eine Expansionseinheit der Wärmepumpe angeordnet sein. Der Luftansaugkanal kann durch eine Trennwand zwischen dem Wärmetauscheraufnahmebereich und dem hierzu separaten Bereich der Bodengruppe verlaufen.

Gemäß einer weiteren vorteilhaften Ausgestaltung ist der Zusatzwärmetauscher als ein dem Verflüssiger nachgeschalteter Unterkühler oder als dem Verflüssiger vorgeschalteter Enthitzer ausgebildet. Diese Ausgestaltungen des Zusatzwärmetauschers unterscheiden sich in der zu ihrer Verwendung jeweilig erforderlichen Verrohrung der Wärmepumpe.

Gemäß einem erfindungsgemäßen Verfahren zum Betreiben eines Geräts zum Trocknen von Wäsche wird einem Verflüssiger einer innerhalb eines Gerätegehäuses des Geräts angeordneten Wärmepumpe des Geräts ein Luftmassenstrom zugeführt, der teilweise aus einer Umgebungsluft, die mittels einer thermisch mit der Wärmepumpe gekoppelten offenen Trocknungsluftführung des Geräts angesaugt wird, und teilweise aus einer innerhalb des Gerätegehäuses angesaugten Luft besteht, wobei eine aus einem Behälter der Trocknungsluftführung, der eine Wäschetrommel des Geräts aufnimmt, austretende Luft zusätzlich mittels eines Zusatzwärmetauschers der Wärmepumpe erwärmt wird, der bezüglich eines Luftmassenstroms durch die Trocknungsluftführung einem Verdampfer der Wärmepumpe nachgeschaltet ist und der bezüglich eines Kältemittelstroms durch einen Kältemittelkreislauf der Wärmepumpe unmittelbar oder über den Verflüssiger mittelbar einer Expansionseinheit der Wärmepumpe vorgeschaltet ist.

Mit dem Verfahren sind die oben mit Bezug auf das Gerät genannten Vorteile entsprechend verbunden. Insbesondere kann das Gerät gemäß einer der oben genannten Ausgestaltungen oder einer Kombination von wenigstens zwei dieser Ausgestaltungen miteinander zur Durchführung des Verfahrens verwendet werden.

Im Folgenden wird die Erfindung unter Bezugnahme auf die anliegenden Figuren anhand einer bevorzugten Ausführungsform exemplarisch erläutert. Es zeigen:
- Fig. 1: eine schematische Schnittdarstellung eines Ausführungsbeispiels für ein erfindungsgemäßes Gerät; und
- Fig. 2: ein Prozessschaltbild des in Fig. 1 gezeigten Geräts.

In den Figuren sind gleiche bzw. funktionsgleiche Bauteile mit denselben Bezugszeichen versehen. Eine wiederholte Beschreibung solcher Bauteile kann in der nachfolgenden Beschreibung der Figuren weggelassen sein.

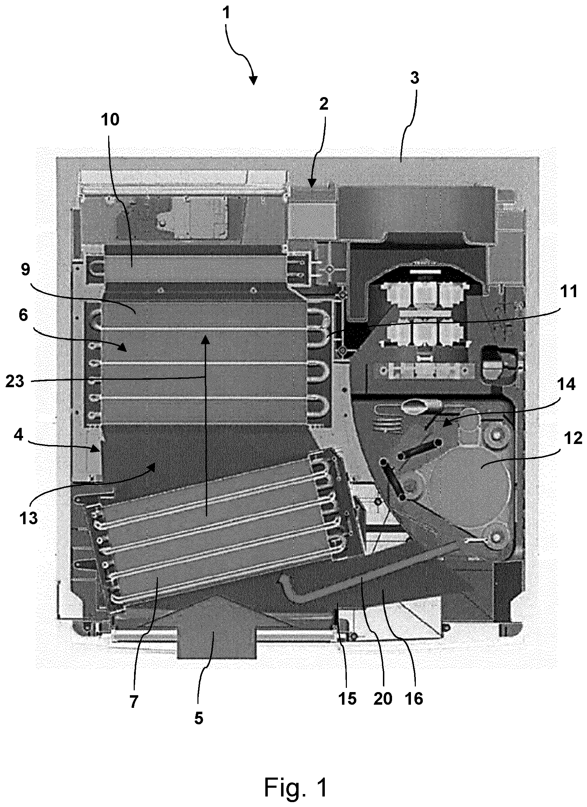

Fig. 1 zeigt eine schematische Schnittdarstellung eines Ausführungsbeispiels für ein erfindungsgemäßes Gerät 1 zum Trocknen von Wäsche. Es ist insbesondere ein Horizontalschnitt einer Bodengruppe 2 des Geräts 1 gezeigt.

Das Gerät 1 weist ein die Bodengruppe 2 aufnehmendes Gerätegehäuse 3, eine innerhalb des Gerätegehäuses 3 angeordnete offene Trocknungsluftführung 4 zum Ansaugen von Umgebungsluft entsprechend dem Pfeil 5 während eines Trocknungsvorgangs und eine innerhalb des Gerätegehäuses 3 angeordnete, thermisch an die Trocknungsluftführung 4 gekoppelte Wärmepumpe 6 auf.

Die Wärmepumpe 6 weist einen Verflüssiger 7, einen bezüglich eines durch den Pfeil 23 angedeuteten Luftmassenstroms durch die Trocknungsluftführung 4 dem Verflüssiger 7 nachgeschalteten Verdampfer 9 und einen bezüglich des Luftmassenstroms durch die Trocknungsluftführung 4 dem Verdampfer 9 nachgeschalteten Zusatzwärmetauscher 10 auf, der bezüglich eines Kältemittelstroms durch einen Kältemittelkreislauf 11 der Wärmepumpe 6 unmittelbar einer Expansionseinheit 17 des Kältemittelkreislaufs 11 vorgeschaltet und dem Verflüssiger 7 nachgeschaltet ist. Zudem weist die Wärmepumpe 6 einen Verdichter 12 auf. Der Verflüssiger 7, der Verdampfer 9 und der Zusatzwärmetauscher 10 sind auf nicht gezeigte Weise in einem bezüglich des Luftmassenstroms radial außen geschlossenen Wärmepumpenbereich 13 und somit getrennt von einem Bereich 14 der Bodengruppe 2 angeordnet, in dem der Verdichter 12 und die Expansionseinheit angeordnet sind. Der Zusatzwärmetauscher 10 kann als Unterkühler ausgebildet sein.

Die Trocknungsluftführung 4 weist eine innerhalb des Gerätegehäuses 3 angeordnete Luftansaugöffnung 15 auf, die an einem Abschnitt der Trocknungsluftführung 4 angeordnet ist, der bezüglich des während des Trocknungsvorgangs gegebenen Luftmassenstroms durch die Trocknungsluftführung 4 dem Verflüssiger 7 der Wärmepumpe 6 vorgeschaltet ist. Die Luftansaugöffnung 15 ist über einen Luftansaugkanal 16 kommunizierend mit dem Bereich 14 der Bodengruppe 2 verbunden, der separat von dem Wärmetauscheraufnahmebereich 13 der Bodengruppe 2 angeordnet ist. Über den Luftansaugkanal 16 wird innerhalb des Gerätegehäuses 3 eine Leckageluft entsprechend dem Pfeil 20 angesaugt.

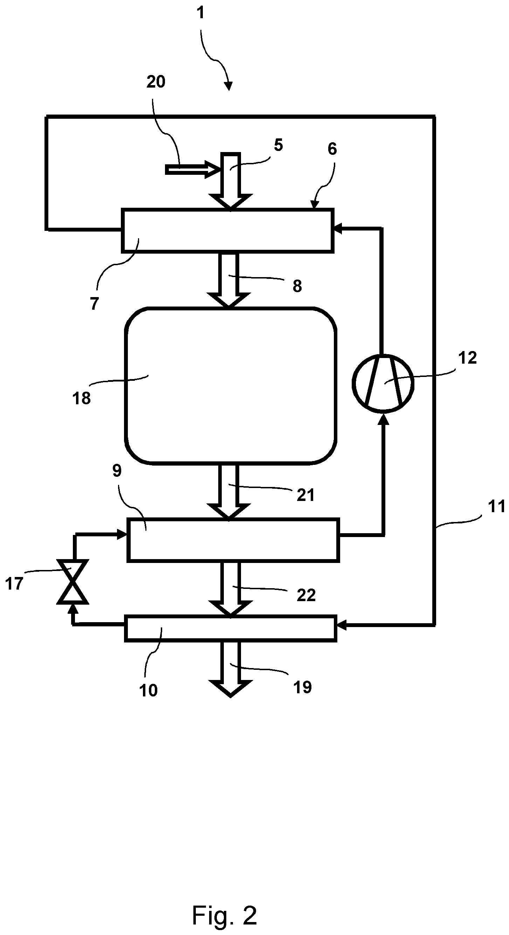

Fig. 2 zeigt ein Prozessschaltbild des in Fig. 1 gezeigten Geräts 1. Es sind zusätzlich die Expansionseinheit 17 der Wärmepumpe 6 und ein Behälter 18 gezeigt, der eine nicht gezeigte Wäschetrommel aufnimmt. Umgebungsluft strömt entsprechend dem Pfeil 5 in das Gerät 1 ein und wird entsprechend den Pfeilen 8, 21, 22 durch das Gerät 1 bzw. dessen in Fig. 2 nicht gezeigte Trocknungsluftführung hindurchgeführt, wozu ein nicht gezeigtes Gebläse verwendet wird. Die aus dem Zusatzwärmetauscher 10 austretende Luft wird entsprechend dem Pfeil 19 aus dem Gerät 1 abgeführt. Entsprechend dem Pfeil 20 wird der angesaugten Umgebungsluft zusätzlich eine innerhalb des nicht gezeigten Gerätegehäuses angesaugte Leckageluft zugeführt.

### Bezugszeichenliste:

- 1: Gerät
- 2: Bodengruppe
- 3: Gerätegehäuse
- 4: Trocknungsluftführung
- 5: Pfeil (einströmende Umgebungsluft)
- 6: Wärmepumpe
- 7: Verflüssiger
- 8: Pfeil (Luftmassenstrom zu 18)
- 9: Verdampfer
- 10: Zusatzwärmetauscher
- 11: Kältemittelkreislauf
- 12: Verdichter
- 13: Wärmepumpenbereich von 2
- 14: Bereich von 2
- 15: Luftansaugöffnung von 4
- 16: Luftansaugkanal
- 17: Expansionseinheit
- 18: Behälter
- 19: Pfeil (austretende Trocknungsluft)
- 20: Pfeil (angesaugte Leckageluft)
- 21: Pfeil (Luftmassenstrom zu 9)
- 22: Pfeil (Luftmassenstrom zu 10)
- 23: Pfeil (Luftmassenstrom durch 4)

## Patentansprüche

1. Gerät (1) zum Trocknen von Wäsche, aufweisend ein Gerätegehäuse (3), wenigstens eine innerhalb des Gerätegehäuses (3) angeordnete offene Trocknungsluftführung (4) zum Ansaugen von Umgebungsluft während eines Trocknungsvorgangs und wenigstens eine innerhalb des Gerätegehäuses (3) angeordnete, thermisch an die Trocknungsluftführung (4) gekoppelte Wärmepumpe (6), wobei die Trocknungsluftführung (4) wenigstens eine innerhalb des Gerätegehäuses (3) angeordnete Luftansaugöffnung (15) aufweist, die an einem Abschnitt der Trocknungsluftführung (4) angeordnet ist, der bezüglich eines während des Trocknungsvorgangs gegebenen Luftmassenstroms durch die Trocknungsluftführung (4) einem Verflüssiger (7) der Wärmepumpe (6) vorgeschaltet ist, **dadurch gekennzeichnet, dass** die Wärmepumpe (6) zusätzlich zu einem Verdampfer (9) einen bezüglich des Luftmassenstroms durch die Trocknungsluftführung (4) dem Verdampfer (9) nachgeschalteten Zusatzwärmetauscher (10) aufweist, der bezüglich eines Kältemittelstroms durch einen Kältemittelkreislauf (11) der Wärmepumpe (6) unmittelbar oder über den Verflüssiger (7) mittelbar einer Expansionseinheit (17) des Kältemittelkreislaufs (11) vorgeschaltet ist.

2. Gerät (1) nach Anspruch 1, **dadurch gekennzeichnet, dass** die Luftansaugöffnung (15) über einen Luftansaugkanal (16) kommunizierend mit einem Bereich (14) einer Bodengruppe (2) des Geräts (1) verbunden ist, der separat von einem Wärmetauscheraufnahmebereich (13) der Bodengruppe (2) angeordnet ist und in dem zumindest ein Verdichter (12) der Wärmepumpe (6) angeordnet ist.

3. Gerät (1) nach Anspruch 1 oder 2, **dadurch gekennzeichnet, dass** der Zusatzwärmetauscher (10) als ein dem Verflüssiger (7) nachgeschalteter Unterkühler oder als dem Verflüssiger (7) vorgeschalteter Enthitzer ausgebildet ist.

4. Verfahren zum Betreiben eines Geräts (1) zum Trocknen von Wäsche, wobei einem Verflüssiger (7) einer innerhalb eines Gerätegehäuses (3) des Geräts (1) angeordneten Wärmepumpe (6) des Geräts (1) ein Luftmassenstrom zugeführt wird, der teilweise aus einer Umgebungsluft, die mittels einer thermisch mit der Wärmepumpe (6) gekoppelten offenen Trocknungsluftführung (4) des Geräts (1) angesaugt wird, und teilweise aus einer innerhalb des Gerätegehäuses (3) angesaugten Luft besteht, **dadurch gekennzeichnet, dass** eine aus einem Behälter (18) der Trocknungsluftführung (4), der eine Wäschetrommel des Geräts (1) aufnimmt, austretende Luft zusätzlich mittels eines Zusatzwärmetauschers (10) der Wärmepumpe (6) erwärmt wird, der bezüglich eines Luftmassenstroms durch die Trocknungsluftführung (4) einem Verdampfer (9) der Wärmepumpe (6) nachgeschaltet ist und der bezüglich eines Kältemittelstroms durch einen Kältemittelkreislauf (11) der Wärmepumpe (6) unmittelbar oder über den Verflüssiger (7) mittelbar einer Expansionseinheit (17) der Wärmepumpe vorgeschaltet ist.

## Claims

1. Appliance (1) for drying laundry, having an appliance housing (3), at least one open drying air duct (4) arranged inside the appliance housing (3) for drawing in ambient air during a drying process and at least one heat pump (6) which is arranged inside the appliance housing (3) and is thermally coupled to the drying air duct (4), wherein the drying air duct (4) has at least one air intake opening (15), which is arranged inside the appliance housing (3) and is arranged at a section of the drying air duct (4) which is upstream of a condenser (7) of the heat pump (6) as regards the given air mass flow through the air drying duct (4) during the drying process, **characterised in that** the heat pump (6) has in addition to an evaporator (9) an additional heat exchanger (10), which is downstream of the evaporator (9) as regards the air mass flow through the drying air duct (4) and is directly upstream of an expansion unit (17) of the coolant circuit (11) or indirectly via the condenser (7) as regards a coolant flow through a coolant circuit (11) of the heat pump (6).

2. Appliance (1) according to claim 1, **characterised in that** the air intake opening (15) is connected communicatively via an air intake channel (16) with an area (14) of a base assembly (2) of the appliance (1), which is arranged separately from a heat exchanger accommodating area (13) of the base assembly (2) and in which at least one compressor (12) of the heat pump (6) is arranged.

3. Appliance (1) according to claim 1 or 2, **characterised in that** the additional heat exchanger (10) is embodied as a subcooler downstream of the condenser (7) or as a desuperheater upstream of the condenser (7).

4. Method for operating an appliance (1) for drying laundry, wherein an air mass flow is fed to a condenser (7) of a heat pump (6) of the appliance (1) arranged inside an appliance housing (3) of the appliance (1), which consists partly of ambient air, which is drawn in by means of an open drying air duct (4) of the appliance (1) which is thermally coupled to the heat pump (6), and partly of drawn-in air from inside the appliance housing (3), **characterised in that** air emerging from a container (18) of the drying air duct (4), which accommodates a laundry drum of the appliance (1), is in addition heated by means of an additional heat exchanger (10) of the heat pump (6), which is downstream of an evaporator (9) of the heat pump (6) as regards an air mass flow through the drying air duct (4) and is directly upstream of an expansion unit (17) of the heat pump or indirectly via the condenser (7) as regards a coolant flow through a coolant circuit (11) of the heat pump (6).

## Revendications

1. Appareil (1) de séchage du linge, comprenant un boîtier d'appareil (3), au moins un conduit d'air de séchage (4) ouvert disposé à l'intérieur du boîtier d'appareil (3) pour aspirer de l'air ambiant pendant un processus de séchage et au moins une pompe à chaleur (6) disposée à l'intérieur du boîtier d'appareil (3), couplée thermiquement au conduit d'air de séchage (4),
dans lequel le conduit d'air de séchage (4) comprend au moins un orifice d'aspiration d'air (15) disposé à l'intérieur du boîtier d'appareil (3), qui est disposé sur une section du conduit d'air de séchage (4), laquelle est disposée en amont d'un condenseur (7) de la pompe à chaleur (6) par rapport à un flux massique d'air délivré pendant le processus de séchage à travers le conduit d'air de séchage (4),
**caractérisé en ce que** la pompe à chaleur (6) comprend, outre un évaporateur (9), un échangeur de chaleur auxiliaire (10) disposé en aval de l'évaporateur (9) par rapport au flux massique d'air à travers le conduit d'air de séchage (4), qui est disposé en amont d'une unité de détente (17) du circuit d'agent réfrigérant (11) directement ou indirectement par l'intermédiaire du condenseur (7), par rapport à un flux d'agent réfrigérant à travers un circuit d'agent réfrigérant (11) de la pompe à chaleur (6).

2. Appareil (1) selon la revendication 1, **caractérisé en ce que** l'orifice d'aspiration d'air (15) est relié en communication avec une partie (14) d'un groupe de plancher (2) de l'appareil (1) par l'intermédiaire d'un canal d'aspiration d'air (16), qui est agencée séparément d'une partie de logement d'échangeur de chaleur (13) du groupe de plancher (2) et est disposée dans l'au moins un compresseur (12) de la pompe à chaleur (6).

3. Appareil (1) selon la revendication 1 ou 2, **caractérisé en ce que** l'échangeur de chaleur auxiliaire (10) est conçu sous forme d'un sous-refroidisseur disposé en aval du condenseur (7) ou d'un désurchauffeur disposé en amont du condenseur (7).

4. Procédé de fonctionnement d'un appareil (1) de séchage du linge, dans lequel un flux massique d'air est amené à un condenseur (7) d'une pompe à chaleur (6) de l'appareil (1) disposée à l'intérieur d'un boîtier (3) de l'appareil (1), qui est composé en partie d'un air ambiant, qui est aspiré au moyen d'un conduit d'air de séchage (4) de l'appareil (1) ouvert couplé thermiquement à la pompe à chaleur (6), et en partie d'un air aspiré à l'intérieur du boîtier d'appareil (3),
**caractérisé en ce que** de l'air sortant d'une cuve (18) du conduit d'air de séchage (4), qui loge un tambour à linge de l'appareil (1), est réchauffé en plus au moyen d'un échangeur de chaleur auxiliaire (10) de la pompe à chaleur (6), qui est disposé en aval d'un évaporateur (9) de la pompe à chaleur (6) par rapport à un flux massique d'air à travers le conduit d'air de séchage (4) et est disposé en amont d'une unité de détente (17) de la pompe à chaleur directement ou indirectement par l'intermédiaire du condenseur (7), par rapport à un flux d'agent réfrigérant à travers un circuit d'agent réfrigérant (11) de la pompe à chaleur (6).
